# DEMANDE DE BREVET EUROPEEN

(11) **EP 4 461 133 A1**
(43) Date de publication de la demande: **13.11.2024**
(21) Numéro de dépôt: 24172495.4
(22) Date de dépôt: 25.04.2024
(51) Int. Cl.: A01K 1/01

(54) **CAISSE D AISANCE POUR ANIMAUX INTÉGRANT UN DISPOSITIF DE NETTOYAGE**

(30) Priorité: 27.04.2023 FR 2304295; 31.07.2023 FR 2308307
(71) Demandeur: Leroy Jcg, 69210 Lentilly (FR)
(72) Inventeur: LEROY, Jérémy, 69210 LENTILLY (FR); SERVY, Guillaume, 69210 LENTILLY (FR)
(74) Mandataire: Bringer IP

(57) **Abrégé**

La présente invention concerne une caisse d'aisance pour animaux domestiques, de type chats ou rongeurs, comprenant un cylindre où est disposée la litière, un moyen de séparation des déjections de la litière et un dispositif de récupération, déporté et clos, des déjections.

La caisse d'aisance pour animaux intègre un dispositif de nettoyage comprenant le cylindre en rotation sur un châssis (101), la rotation étant générée par à un moyen (114a, 114b) de mise en rotation actionné par un moyen (113) de commande dudit moyen (114a, 114b) de mise en rotation, ladite enceinte comprenant un moyen de recueil des déjections couplé à une trappe (104) dotée d'un moyen (156) de verrouillage et déverrouillage interdépendant d'un moyen de commande de déverrouillage de ladite trappe (104) et d'un moyen (138) de guidage de la trappe (104) couplée au moyen de recueil des déjections vers un réservoir (106) de réception des déjections.

## Description

### Domaine de l'invention

La présente invention concerne une caisse d'aisance pour animaux domestiques, de type chats ou rongeurs, comprenant un cylindre rotatif où est disposé la litière, un moyen de séparation des déjections de la litière et un dispositif de récupération, déporté et clos, des déjections.

### Arrière-plan technologique

Traditionnellement, les propriétaires d'animaux domestiques, et particulièrement de chats, mettent à la disposition de ces derniers des caisses, remplies de litière, afin qu'ils y fassent leurs besoins. Les désagréments de ces caisses sont nombreux : l'odeur, la dispersion de la litière en dehors de la caisse lorsque l'animal gratte, et surtout la nécessité de les vider et de les nettoyer très régulièrement.

Pour remédier à cela, des dispositifs fermés ne laissant qu'une ouverture pour le passage de l'animal, et intégrant un moyen de collecte automatisée des excréments ont été inventés.

WO2012154175 décrit un appareil d'aisance constitué d'une enceinte cylindrique rotative dans laquelle est placée la litière et où une ouverture permet à l'animal d'entrer et de sortir. Un tiroir de tamisage, de forme rectangulaire, est intégré sur la paroi intérieure du cylindre. Lorsque le cylindre effectue une rotation de 360°, le tiroir passe à travers la litière ; les déjections sont retenues dans le tiroir de tamisage tandis que la litière filtrée reste dans le volume intérieur de l'enceinte. Le tiroir est ensuite extrait du cylindre pour être vidé. La présence du tiroir dans le cylindre a cependant pour inconvénient de diminuer considérablement la place laissée à l'animal. En outre, le fait que le tiroir ne soit pas fermé pose des problèmes d'hygiène, notamment en ce qui concerne les odeurs.

EP0297015, qui décrit un même type d'enceinte rotative munie d'une herse servant à filtrer les déjections, présente un inconvénient similaire puisque le réceptacle destiné à récupérer les déjections est à l'intérieur du cylindre.

FR2693872 se distingue des précédents documents en ce qu'il prévoit un bac de récupération extérieur au cylindre. Lorsque le cylindre effectue sa rotation, une herse traverse la litière et récupère les excréments. Arrivé à une certaine hauteur, un couvercle, couplé à la herse, va basculer par gravité et entrainer la herse. Pour finir, les excréments vont se déverser dans le tiroir de récupération. Pour autant, ce réservoir est ouvert ce qui, là encore, présente des problèmes d'hygiène et d'odeurs. Et même muni d'un couvercle, les excréments ne pourraient s'y déverser sans intervention manuelle.

Les solutions proposées ne font donc que déporter le problème de l'hygiène sans vraiment le résoudre puisque les dispositifs proposés impliquent que les déjections restent toujours en contact avec l'air extérieur et/ou imposent des manipulations fréquentes.

La présente invention pallie toutes les faiblesses des dispositifs de l'art antérieur en proposant un réservoir de récupération des excréments extérieur, clos et amovible et un moyen de récupération et d'extraction des déjections interdépendant dudit réservoir.

### Exposé de l'invention

La présente invention a pour but de proposer une caisse d'aisance remédiant à tous les inconvénients de l'art antérieur.

L'invention concerne ainsi une caisse d'aisance pour animaux intégrant un dispositif de nettoyage comprenant une enceinte cylindrique destinée à recevoir la litière, perforée d'un moyen d'accès pour l'animal, en rotation sur un châssis, la rotation étant générée par à un moyen de mise en rotation actionné par un moyen de commande dudit moyen de mise en rotation, ladite enceinte comprenant un moyen de recueil des déjections couplé à une trappe dotée d'un moyen de verrouillage et déverrouillage interdépendant d'un moyen de commande de déverrouillage de ladite trappe et d'un moyen de guidage de la trappe couplée au moyen de recueil des déjections vers un réservoir de réception des déjections.

Avantageusement, le réservoir comprend un couvercle articulé sur une charnière sur l'une de ses longueurs et est doté d'un guide d'ouverture sur l'autre longueur, ledit guide se situant sur l'axe de rotation du moyen de verrouillage et déverrouillage de la trappe et étant poussé par ce dernier lorsqu'ils entrent en contact afin de soulever et d'ouvrir le couvercle du réservoir.

Selon un mode préféré de réalisation, le châssis est doté d'un moyen de commande de verrouillage du moyen de verrouillage et déverrouillage de la trappe, ledit moyen de verrouillage et déverrouillage étant par ailleurs doté d'un moyen de verrouillage complémentaire.

Préférentiellement, le moyen de recueil des déjections comprend des moyens de passage de la litière complétés d'un moyen de modulation de la largeur desdits moyens de passage de la litière.

Selon une variante, la caisse d'aisance comprend un moyen de recouvrement et de transport.

Avantageusement et selon l'invention, les moyens de mise en rotation comprennent au moins un support cylindrique d'axe de rotation parallèle à l'axe de rotation du cylindre configuré pour supporter le cylindre et pour qu'une rotation d'au moins un support cylindrique entraîne une rotation du cylindre.

Avantageusement et selon l'invention, les moyens de commande du moyen de mise en rotation sont amovibles et la caisse d'aisance est configuré pour permettre un changement manuel des moyens de commande du moyen de mise en rotation entre deux mises en rotation de l'enceinte cylindrique.

### Liste des figures

Dans cette description, on se réfère aux dessins annexés sur lesquels :
- la figure 1 représente schématiquement en vue avant un ensemble châssis et cylindre d'un caisson d'aisance selon un premier mode de réalisation de l'invention ;
- la figure 2 représente schématiquement en vue arrière un ensemble châssis et cylindre d'un caisson d'aisance selon un premier mode de réalisation de l'invention ;
- la figure 3 représente schématiquement en vue avant un châssis d'un caisson d'aisance selon un premier mode de réalisation de l'invention ;
- la figure 4 représente schématiquement en vue arrière un châssis d'un caisson d'aisance selon un premier mode de réalisation de l'invention ;
- la figure 5 représente schématiquement en vue une herse d'un caisson d'aisance selon un premier mode de réalisation de l'invention ;
- la figure 6 représente schématiquement en vue avant un caisson d'aisance selon un premier mode de réalisation de l'invention avec un couvercle,
- la figure 7 représente schématiquement en perspective un caisson d'aisance selon un deuxième mode de réalisation de l'invention,
- la figure 8 représente schématiquement en perspective un caisson d'aisance selon un deuxième mode de réalisation de l'invention,
- la figure 9 représente schématiquement en perspective éclatée un caisson d'aisance selon un deuxième mode de réalisation de l'invention,
- la figure 10 représente schématiquement de face en transparence un caisson d'aisance selon un deuxième mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

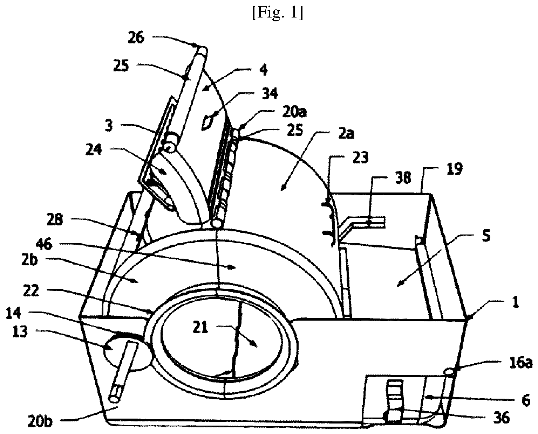

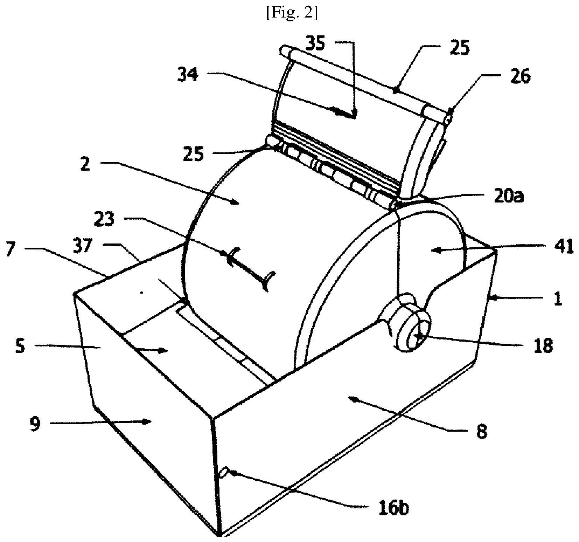

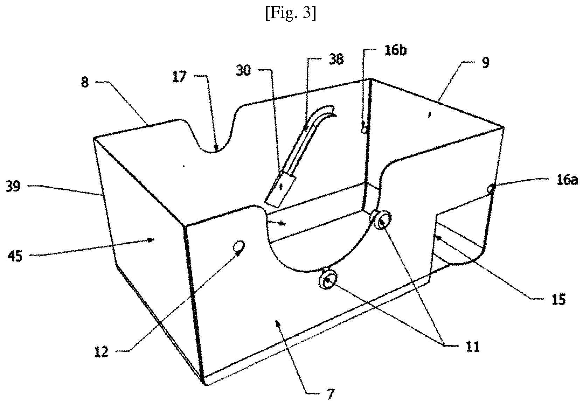

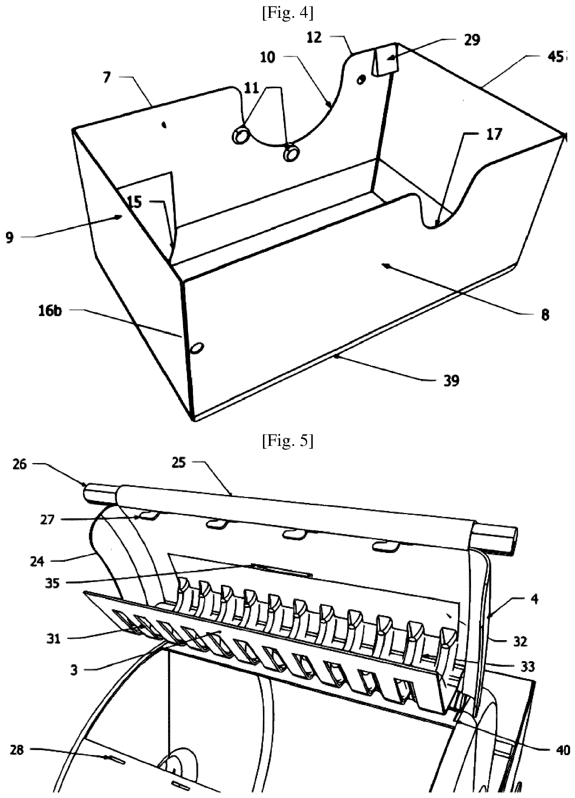

Les figures 1 à 6 représentent schématiquement différentes vues d'une caisse d'aisance selon un premier mode de réalisation de l'invention.

Selon ce premier mode de réalisation de l'invention, la caisse d'aisance selon l'invention consiste à associer sur un châssis 1, d'une part une enceinte cylindrique, dite cylindre 2 rotatif, destinée à recueillir litière et déjections animales et à les trier grâce à un système associant une herse 3, formant un moyen de recueil des déjections, et une trappe 4 et d'autre part un réservoir 6 recevant les déjections, extérieur et attenant au cylindre 2, muni d'un couvercle 5 dont l'ouverture et la fermeture sont interdépendants de la rotation dudit cylindre 2.

Le châssis 1 est de forme rectangulaire et est composé d'un socle 39, d'une paroi 7 avant, d'une paroi 8 arrière et de deux parois latérales qui peuvent être définies, lorsqu'on se trouve face au dispositif, comme une paroi 9 latérale droite et une paroi 45 latérale gauche.

La paroi 7 avant comporte une première découpe 10 de forme semi-circulaire destinée à soutenir une face 46 avant du cylindre qui va s'y emboiter. Cette première découpe 10 comporte elle-même deux entailles semi-circulaires dans lesquelles vont être fixées deux roulettes 11 qui vont permettre au cylindre de tourner. À proximité de la première découpe 10 accueillant la face 46 avant du cylindre est prévu un trou 12 servant de moyen de passage et de fixation d'une manivelle 13 formant un moyen de commande de moyens de mise en rotation. Cette manivelle 13 va venir s'emboiter sur la face 46 avant du cylindre laquelle présente une ouverture 21, formant un moyen d'accès pour l'animal, dont les bords se recourbent de manière à constituer une poulie 22. Lorsque le cylindre est emboité, la poulie 22 dépasse du châssis. Un galet 14 de la manivelle, qui forme un moyen de mise en rotation et est recouvert de caoutchouc, va alors s'emboiter dans la poulie 22 et faire office de roue de friction : les frottements entre le galet 14 de la manivelle et le cylindre 2 vont entrainer un mouvement de rotation de ce dernier. Selon une variante, le galet 14 de la manivelle est remplacé par une roue crantée et l'intérieur de la poulie 22 est également équipé de crans. Les crans de la manivelle 13 vont s'emboiter dans les crans de la poulie et entrainer ainsi la mise en rotation du cylindre 2.

La paroi 7 avant du châssis présente également une ouverture servant de moyen 15 de passage du réservoir. Juste au-dessus, une première encoche 16a circulaire sert de moyen de passage et de fixation de la charnière 19 du couvercle du réservoir 5.

Selon d'autres modes de réalisation de l'invention, l'ouverture servant de moyen de passage peut être prévue sur une autre paroi du châssis, en particulier la paroi arrière ou la paroi latérale droite.

La paroi arrière 8 du châssis présente également une deuxième découpe 17 semi-circulaire, moins importante que celle de la paroi 7 avant mais située dans son axe : cette deuxième découpe 17 est destinée à soutenir et à faire tourner le cylindre selon un axe 18 de rotation et se trouve à l'arrière 41 du cylindre. À l'autre extrémité de la paroi arrière 8 se trouve une deuxième encoche 16b circulaire servant de moyen 19 de passage et de fixation de la charnière du couvercle du réservoir 5, placée dans l'axe de la première encoche 16a.

Le cylindre 2 du dispositif selon l'invention est composé de deux demi-cylindres 2a et 2b. Ils sont reliés entre eux par des charnières 20a et 26 ayant la forme de tubes dont la longueur correspond à la largeur du cylindre. Sur l'arrière 41 du cylindre se trouve l'axe 18 de rotation qui se positionne sur la deuxième découpe 17 semi-circulaire de la face arrière du châssis dans ce premier mode de réalisation. Sur l'avant du cylindre 46 se trouve une ouverture 21 circulaire par laquelle l'animal domestique entre pour faire ses besoins dans la litière, puis ressort. Les bords de cette ouverture sont recourbés de manière à créer une poulie 22 qui va permettre d'une part de fixer le cylindre sur la paroi 7 avant du châssis et d'autre part d'y emboiter le galet 14 de la manivelle afin de permettre la mise en rotation du cylindre. Lorsqu'il est en mouvement, le cylindre 2 est configuré pour des rotations de 360°. Le cylindre 2 est de préférence équipé d'une poignée 23 qui permet de l'enlever facilement du châssis lorsqu'on souhaite le vider totalement et le nettoyer.

Le cylindre 2 est équipé d'une trappe 4 associée à une herse 3 destinés à extraire les excréments des animaux tout en conservant la litière qui n'a pas été souillée. Lorsque le cylindre 2 est en position de repos, la trappe 4 est située sur son sommet. La trappe 4 est de forme rectangulaire, légèrement incurvée pour adopter la forme du cylindre 2 et s'y intégrer. Sur chacune des largeurs de la trappe 4 se trouvent des parois 24 perpendiculaires servant à assurer une fermeture hermétique. Sur chacune de ses longueurs, la trappe est reliée à une charnière. La première charnière 20a relie la trappe 4 au cylindre 2. La trappe 4 est fixée à la charnière grâce à des bagues 25 de fixation qui lui assurent une mobilité par rotation permettant son ouverture et sa fermeture. Un ressort 40 de rappel est fixé à cette charnière 20a. Il sert à assurer la fermeture de la trappe après que celle-ci a été ouverte. La seconde charnière 26 est également maintenue à la trappe 4 grâce à des bagues 25 de fixation. Cette charnière dépasse légèrement de part et d'autre du cylindre. Elle est par ailleurs équipée de petits crochets 27 qui constituent un moyen de verrouillage complémentaire. Ces crochets 27 ont une forme de coude et vont permettre la fermeture de la trappe 4, et par conséquent du cylindre 2, et assurer son maintien en position fermée pendant la quasi-totalité de la rotation, et ce, même lorsque le couvercle se trouvera sous la litière et portera tout son poids. Pour assurer cette fermeture, des trous 28 sont prévus sur la paroi du cylindre en face des crochets 27. Lorsque le couvercle sera fermé, les crochets 27 vont s'insérer dans les trous 28. Lorsque le cylindre va commencer sa rotation dans le sens inverse des aiguilles d'une montre, la seconde charnière 26 comportant les crochets va descendre et rencontrer, en haut de la partie interne avant du châssis 7, une première pièce 29 en forme de biseau dont la partie la plus haute se situe vers le bas de la paroi avant du châssis. Lorsqu'elle va rencontrer cette première pièce 29en forme de biseau, la seconde charnière 26 va être progressivement poussée en direction de la paroi arrière du châssis 8, entrainant avec elle les crochets 27 qui vont finalement se bloquer contre la paroi interne du cylindre. Le couvercle sera alors verrouillé. Le cylindre va continuer sa rotation sur environ 200°. La partie arrière de la seconde charnière 26 qui a été poussée et qui dépasse légèrement du cylindre va alors rencontrer une seconde pièce 30 en forme de biseau, à mi-hauteur de la partie interne arrière du châssis 8, et dont la partie la plus haute se situe vers le haut de cette dernière. La deuxième pièce 30 en forme de biseau va alors pousser la seconde charnière 26 en direction de la paroi avant du châssis 7, entrainant avec elle les crochets 27 qui vont être libérés de la paroi interne du cylindre et se débloquer. Le couvercle sera alors déverrouillé. Ce mouvement de déverrouillage permet en outre d'entrainer une secousse de la herse 3 et de faire tomber l'excédent de litière filtrée. La seconde charnière forme ainsi un moyen de verrouillage et déverrouillage, interdépendant de la seconde pièce 30 en forme de biseau qui forme un moyen de commande de déverrouillage de la trappe 4. La première pièce 29 en biseau forme un moyen de commande de verrouillage de la seconde charnière. Les petits crochets 27 forment un moyen de verrouillage complémentaire.

Dans d'autres modes de réalisation, d'autres solution de verrouillage et déverrouillage de la trappe 4 sont possibles. En particulier, la seconde charnière 26 peut être remplacée par un système différent, par exemple un moyen de verrouillage agencé sur la trappe et pouvant être mis en rotation entre une première position dans laquelle la trappe et verrouillée et une deuxième position dans laquelle la trappe est déverrouillée. Le verrouillage et déverrouillage est réalisé par interaction avec des moyens de guidage fixés sur le châssis, en particulier un premier moyen de guidage fixé sur la paroi 45 latérale gauche permettant le verrouillage de la trappe et un moyen de guidage fixé du côté de la paroi 9 latérale droite du châssis, par exemple sur une paroi non représentée séparant le cylindre 2 du réservoir 6.

En outre, dans un mode de réalisation similaire à celui présenté en référence aux figures 1 à 6, les moyens de verrouillage et déverrouillage peuvent présenter des fonctionnements similaires avec des moyens de forme différentes, en particulier la seconde charnière peut être remplacée par une pièce plate comportant des crochets similaires pour interaction avec par exemple des trous dans le cylindre comme décrit précédemment, ou par exemple des pièces d'accroche fixés au cylindre.

La herse 3 est fixée sous la trappe 4 et lorsque cette dernière est fermée, la herse est à l'intérieur du cylindre. La herse 3 est soudée à la trappe et dans son mouvement, la herse est solidaire de la trappe. Dans sa forme, la herse 3 descend perpendiculairement à la trappe 4 pour ensuite se positionner parallèlement à elle de manière à constituer une forme de mâchoire destinée à recueillir les déjections. Elle présente, sur toute sa longueur, des ouvertures 31 qui auront pour rôle de laisser s'écouler la litière non souillée. Les ouvertures 31 forment ainsi un moyen de passage de la litière.

Afin de s'adapter à la taille des déjections des animaux, la herse est recouverte d'une grille 32 qui épouse la forme de mâchoire constituée par la trappe 4 et la herse 3 et s'y emboite, sans y être fixée, de manière à rester mobile. Cette grille 32 présente des ouvertures 33 similaires à celles de la herse. Cette grille possède, sur sa face supérieure, une tige 34 qui va ressortir de la trappe 4 par une ouverture 35 prévue à cet effet. Cette ouverture est légèrement plus large que la tige 34 de manière à pouvoir manipuler cette dernière en la poussant en direction de la paroi avant du châssis 7 ou en direction de la paroi arrière du châssis 8. Ce faisant, la grille va se mouvoir au-dessus de la herse et plus ou moins recouvrir les ouvertures de cette dernière dont elle va moduler la taille. La grille peut être positionnée de manière à recouvrir totalement les ouvertures 31 de la herse 3 ; cette dernière sera ainsi fermée et pourra récupérer l'intégralité de la litière lors des opérations de nettoyage. La grille 32 forme ainsi un moyen de modulation de la largeur des ouvertures.

Lorsque la trappe 4 est fermée et que le cylindre 2 commence sa rotation, la herse se trouve à l'intérieur du cylindre. En descendant, elle va traverser la litière qu'elle va filtrer. Les déjections, dont la taille est supérieure à celle des ouvertures 31 de la herse, vont être retenues entre la trappe 4 et la herse 3, et la litière non souillée sera filtrée et s'écoulera à travers les ouvertures 31 de la herse pour revenir sur le fond du cylindre où elle sera réutilisée. Après cette phase de filtrage, la rotation du cylindre va continuer et la trappe et la herse vont remonter, entrainant les déjections avec eux.

Le réservoir 6 destiné à accueillir les déjections se situe à l'intérieur du châssis 1, le long de la paroi 9 latérale droite de celui-ci et est attenant au cylindre 2. Il est de forme rectangulaire, s'insère et s'enlève du châssis grâce à une ouverture 15 prévue à cet effet et est muni d'une poignée 36 sur sa partie avant afin d'être manipulé plus facilement. Le réservoir est recouvert d'un couvercle 5 mobile qui assure une meilleure hygiène et empêche toute propagation d'odeurs. Sur sa longueur mitoyenne avec la paroi latérale droite 9 du châssis, le couvercle est attaché sur une charnière 19, laquelle est fixée dans le châssis grâce à deux encoches de fixation 16a et 16b présentes sur la paroi 7 avant et sur la paroi 8 arrière du châssis. Sur l'autre longueur du couvercle du réservoir, située à l'avant, se trouve une petite excroissance 37 de forme rectangulaire, formant un guide d'ouverture.

Lorsque le cylindre 2 va remonter après avoir filtré la litière et juste après que la trappe 4 ait été déverrouillée, la partie de la charnière 26 de fermeture de la trappe qui se situe vers la paroi avant du châssis 7 et qui dépasse légèrement du cylindre 2, va buter contre cette excroissance 37. Cette dernière, bloquée par la charnière, va être entrainée par le mouvement de rotation du cylindre et remonter, entrainant avec elle l'intégralité du couvercle 5 du réservoir qui va s'ouvrir. Parallèlement, l'extrémité arrière de la charnière 26 de fermeture du couvercle va rencontrer une came 38 fixée sur la paroi arrière du cylindre 8, positionnée de manière oblique sur cette paroi. La charnière 26 va être bloquée par la came 38, sous laquelle elle va glisser, entrainant l'ouverture complète de la trappe. Contrainte par la forme de la came 38 sous laquelle elle est obligée de glisser, la trappe va finir par basculer, entrainant avec elle la herse 3. Par gravité, les déjections vont tomber dans le réservoir 6 dont le couvercle 5 est alors ouvert. Lorsque la trappe aura longé la totalité de la came 38, elle va être libérée et se rabattre sur le cylindre, entrainée par le ressort 40 de rappel qui est fixé sur la charnière 20a reliant la trappe 4 au cylindre 2. Lorsque la trappe 4 va se rabattre sur le cylindre 2, elle va libérer le couvercle 5 du réservoir 6 qui va retomber sur ce dernier et le refermer. Le cylindre 2 va alors terminer sa rotation et s'arrêter lorsque la trappe 4 aura retrouvé sa position initiale, sur le sommet du cylindre. La came 38 forme ainsi un moyen de guidage de la trappe couplé à la herse.

Il est possible d'ajouter au dispositif selon l'invention un couvercle 42 recouvrant l'ensemble du dispositif formant un moyen de recouvrement, comprenant une première encoche sur sa face avant venant s'emboiter dans la poulie 22 du cylindre et une deuxième encoche sur sa face arrière venant s'emboiter dans l'axe de rotation 18, des moyens 43 de fixation au châssis et une poignée 44 en son sommet pour déplacer l'ensemble du dispositif, la poignée 44 formant ainsi un moyen de transport.

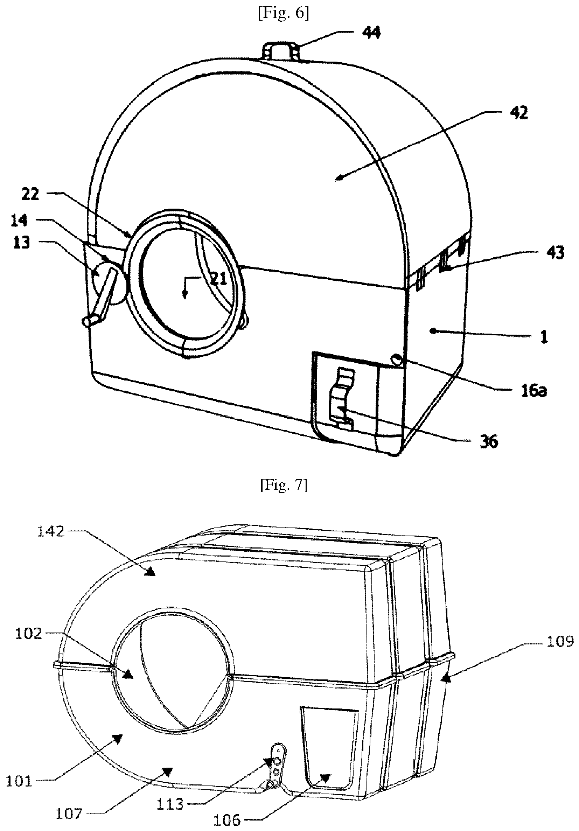

Les figures 7 à 10 représentent schématiquement différentes vues d'une caisse d'aisance selon un deuxième mode de réalisation de l'invention. Le fonctionnement général de la caisse d'aisance est le même que le premier mode de réalisation et les éléments identiques ou similaires au premier mode de réalisation de l'invention ne seront pas redécrits.

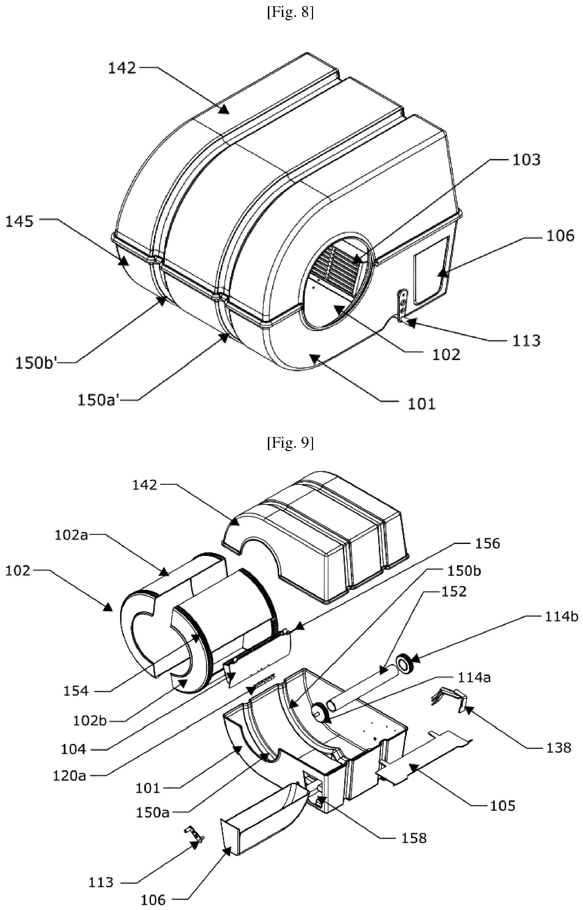

Dans ce deuxième mode de réalisation de l'invention, la caisse d'aisance comprend le cylindre 102 agencé dans le châssis 101 et recouvert du couvercle 142. Le cylindre 102 est de façon avantageuse fabriqué à partir de deux demi-cylindres 102a et 102b assemblés, visibles sur la figure 9.

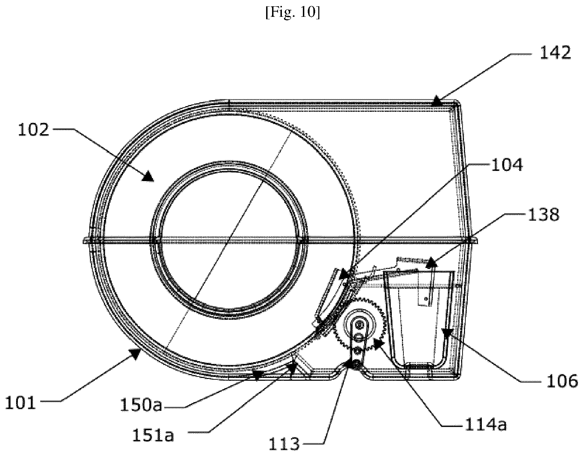

Le châssis 101 présente une forme différente du premier mode de réalisation mais permet les mêmes fonctions. Cette forme présente une esthétique différente mais permet également de répondre à certaines fonctions techniques. En particulier, la paroi 145 latérale gauche présente une forme semi-cylindrique sensiblement conformée au cylindre 102, et présente des rails 150a et 150b de support internes sur lesquels reposent le cylindre 102 et qui accompagnent sa rotation par glissement du cylindre sur les rails. Une portion 151a de rail visible sur la figure 10 permet le maintien du cylindre 102 en place dans le châssis 101. Lorsque le châssis 101 et le couvercle 142 sont conçus chacun par moulage, le rail agencé dans la surface intérieure du châssis 101 forment ici chacun une gorge 150a', 150b' sur la surface extérieure du châssis 101 qui peut être prolongée sur tout le pourtour du châssis 101 et du couvercle 142, en particulier sur la paroi 145 latérale gauche, la paroi 109 latérale droite, la paroi supérieure du couvercle et la paroi inférieure du châssis, comme représenté ici.

Le cylindre 102 est également maintenu en partie par des moyens de mise en rotation formés par un support 152 cylindrique et deux roues 114a et 114b crantées remplaçant le galet du premier mode de réalisation. Le support 152 cylindrique s'étend de la paroi 107 avant à la paroi arrière de la caisse d'aisance et sont fixés auxdites parois.

Le support cylindrique forme ainsi un rouleau de maintien et de guidage et permet à la fois le support et la rotation du cylindre. Le support cylindrique a un axe de rotation parallèle à l'axe de rotation du cylindre 102.

Dans ce mode de réalisation, le cylindre est maintenu par le support cylindrique et l'encoche comme décrite dans le premier mode de réalisation n'est pas nécessaire, mais peut tout de même être présente pour former un support supplémentaire, en particulier un support proche de l'axe de rotation du cylindre, ou pour un aspect esthétique.

Le support 152 cylindrique est configuré pour être mis en rotation par une manivelle 113, de préférence amovible, en permettant la rotation des roues 114a et 114b crantées en interaction avec des portions 154 crantées agencées sur le cylindre 102. De façon alternative, le cylindre comprend une seule portion crantée, par exemple agencée au milieu du cylindre et en interaction avec une unique roue crantée du support cylindrique.

De façon alternative, la manivelle 113 peut être remplacée par un moteur électrique, agencé au niveau de la base d'au moins un des supports cylindriques ou autour dudit support cylindrique. Le moteur électrique peut en particulier être un moteur électrique classique ou un moteur électrique programmable associé à une commande électronique, par exemple une commande électronique intégrée et programmable *in situ,* ou bien programmable à distance, par exemple via un téléphone intelligent (*smartphone* en anglais), ordinateur personnel, tablette électronique ou équivalent. Le moteur électrique peut notamment un moteur de type marche/arrêt (moteur ON/OFF) ou bien programmable sur une plage de vitesse de rotation en fonction des besoins.

Selon un autre mode de réalisation non représenté, le cylindre est maintenu de façon alternative par au moins deux supports cylindriques s'étendant chacun de la paroi avant à la paroi arrière du châssis, sous le cylindre, et comprenant des moyens de fixation à la paroi avant et la paroi arrière. Les supports cylindriques forment ainsi des rouleaux de maintien et de guidage et permettent à la fois le support et la rotation du cylindre. Les supports cylindriques ont chacun un axe de rotation parallèle à l'axe de rotation du cylindre. Les supports cylindriques présentent de préférence chacun au moins une portion crantée agencée pour entrer en interaction avec une portion crantée agencée sur la périphérie du cylindre, de sorte qu'une rotation des supports cylindriques entraîne une rotation du cylindre, et/ou inversement qu'une rotation du cylindre entraîne une rotation des supports cylindriques. Une manivelle telle que décrite précédemment peut de façon avantageuse être ainsi fixée sur la base d'un des supports cylindriques de sorte à permettre une rotation de celui-ci, entraînant ainsi une rotation du cylindre pour le même effet que le mode de réalisation décrit.

La rotation du cylindre 102 entraîne de la même façon que dans le premier mode de réalisation, un mécanisme d'ouverture et de fermeture de la trappe 104 comprenant la grille 103, de sorte à déverser les éventuelles déjections dans le réservoir 106. La trappe 104 s'ouvre et se ferme par pivotement autour de la charnière 120a. Le couvercle 105 du réservoir et la trappe 104 sont ouvert lors du passage de la trappe 104 au niveau du réservoir, grâce à une tige 156 de la trappe 104 qui est guidée dans une came 138. Lorsque le réservoir 106 est rempli, il peut être extrait via une ouverture 158 dans la paroi 107 avant du châssis 101. La tige 156 et la came 138 forment des moyens de guidage de la trappe couplés à la herse.

Les modifications non substantielles qui découleraient de façon évidente, pour l'homme de l'art, de l'utilisation ou de la fabrication dont le brevet est ici requis sans en altérer les dispositions originales, n'en seraient que de simples équivalents techniques et entrent également dans le cadre de la présente invention.

## Revendications

1. Caisse d'aisance pour animaux intégrant un dispositif de nettoyage, **caractérisée en ce qu'**elle comprend une enceinte (2, 102) cylindrique destinée à recevoir la litière, perforée d'un moyen (21) d'accès pour l'animal, en rotation sur un châssis (1, 101), la rotation étant générée par à un moyen (14, 114a, 114b) de mise en rotation actionné par un moyen (13, 113) de commande dudit moyen (14, 114a, 114b) de mise en rotation, ladite enceinte (2, 102) comprenant un moyen (3, 103) de recueil des déjections couplé à une trappe (4, 104) dotée d'un moyen (26) de verrouillage et déverrouillage interdépendant d'un moyen (30) de commande de déverrouillage de ladite trappe (4, 104) et d'un moyen (38, 138) de guidage de la trappe (4, 104) couplée au moyen (3, 103) de recueil des déjections vers un réservoir (6, 106) de réception des déjections.

2. Caisse d'aisance selon la revendication 1, **caractérisée en ce que** le réservoir (6, 106) comprend un couvercle (5, 105) articulé sur une charnière (19) sur l'une de ses longueurs et doté d'un guide (37) d'ouverture sur l'autre longueur, ledit guide se situant sur l'axe de rotation du moyen (26) de verrouillage et déverrouillage de la trappe (4, 104) et étant poussé par ce dernier lorsqu'ils entrent en contact afin de soulever et d'ouvrir le couvercle (5, 105) du réservoir (6, 106).

3. Caisse d'aisance selon l'une des revendications 1 ou 2, **caractérisée en ce que** le châssis (1, 101) est doté d'un moyen (29) de commande de verrouillage du moyen (26) de verrouillage et déverrouillage de la trappe (4, 104), ledit moyen (26) de verrouillage et déverrouillage étant par ailleurs doté d'un moyen (27) de verrouillage complémentaire.

4. Caisse d'aisance selon l'une des revendications 1 à 3, **caractérisée en ce que** le moyen (3, 103) de recueil des déjections comprend des moyens (31) de passage de la litière complétés d'un moyen (32) de modulation de la largeur desdits moyens de passage de la litière.

5. Caisse d'aisance selon l'une des revendications 1 à 4, **caractérisée en ce qu'**elle comprend un moyen (42, 142) de recouvrement et un moyen (44) de transport.

6. Caisse d'aisance selon l'une des revendications 1 à 5, **caractérisée en ce que** les moyens de mise en rotation comprennent au moins un support (152) cylindrique d'axe de rotation parallèle à l'axe de rotation de l'enceinte cylindrique configuré pour supporter l'enceinte (102) et pour qu'une rotation d'au moins un support cylindrique entraîne une rotation de l'enceinte (102).

7. Caisse d'aisance selon l'une des revendications 1 à 6, **caractérisée en ce que** les moyens (13, 113) de commande du moyen (14, 114) de mise en rotation comprennent une manivelle manuelle, de préférence amovible.

8. Caisse d'aisance selon l'une des revendications 1 à 7, **caractérisée en ce que** les moyens (13, 113) de commande du moyen (14, 114) de mise en rotation comprennent un moteur électrique.

9. Caisse d'aisance selon la revendication 8, **caractérisée en ce que** le moteur électrique est un moteur électrique programmable.

10. Caisse d'aisance selon l'une des revendications 1 à 9, **caractérisée en ce que** les moyens (13, 113) de commande du moyen (14, 114) de mise en rotation sont amovibles et **en ce que** la caisse d'aisance est configuré pour permettre un changement manuel des moyens de commande du moyen de mise en rotation entre deux mises en rotation de l'enceinte (102) cylindrique.
